# FASCICULE DE BREVET EUROPEEN

(11) **EP 1 043 187 B1**
(45) Date de publication et mention de la délivrance du brevet: **09.09.2009**
(21) Numéro de dépôt: 00400963.5
(22) Date de dépôt: 07.04.2000
(51) Int. Cl.: B60M 1/36

(54) **Dispositif de détection de présence de véhicule à fiabilité améliorée**
Vorrichtung zur Erfassung der Anwesenheit eines Fahrzeuges mit verbesserter Zuverlässigkeit
Device for detecting the presence of a vehicle with an improved reliability

(30) Priorité: 07.04.1999 FR 9904348
(43) Date de publication de la demande: 11.10.2000
(73) Titulaire: INNORAIL, 95863 Cergy-Pontoise (FR)
(72) Inventeur: Perraud, Olivier, 78510 Le Chesnay (FR); Brunet, Stéphane, 75002 Paris (FR); Morin, Bruno, 75007 Paris (FR)
(74) Mandataire: Le Forestier, Eric

(56) Documents cités:
- EP-A- 0 681 939
- FR-A- 2 696 984
- DATABASE WPI Section PQ, Week 9814 Derwent Publications Ltd., London, GB; Class Q14, AN 1998-146038 XP002125075 & AU 61990 96 A (ROBERTSON JOHN CAMERON), 12 février 1998 (1998-02-12)

## Description

La présente invention concerne les aménagements de détection de la présence de véhicules dans une zone choisie, par exemple au-dessus d'une boucle conductrice placée au sol.

On a par exemple proposé dans le document WO 98/49025 un aménagement d'alimentation par le sol de véhicules électriques dans lequel une série de segments de captation d'alimentation et une ligne sous tension parcourent toutes deux le trajet d'un véhicule électrique, et dans lequel un segment de captation est mis en contact avec la ligne sous tension lorsque le véhicule est détecté au dessus de ce segment.

On propose dans ce document de disposer le long de la voie un ensemble de boucles de détection aptes à capter un signal magnétique alternatif émis par le véhicule de sorte que le segment d'alimentation correspondant à chaque boucle est alimenté lorsque le véhicule se trouve au dessus de la boucle.

Un tel dispositif peut présenter dans certaines conditions une fiabilité insuffisante. En effet, les boucles de détection captent de nombreux signaux parasites dont certains sont susceptibles d'avoir la même fréquence que celle du signal de présence du véhicule. Il reste donc avec ce dispositif un léger risque qu'un segment soit alimenté en dehors de la présence du véhicule. Un tel risque de mise sous tension d'une piste en dehors de la présence du véhicule n'est pas acceptable en ce qu'il ne garantit pas la sécurité des piétons.

De plus, de tels dispositifs sont prévus pour provoquer une coupure de l'alimentation au sol en cas d'anomalie, par exemple en cas d'arrêt de la détection du véhicule.

De telles coupures, lorsqu'elles sont effectuées alors que le véhicule est connecté au segment, génèrent des arcs électriques importants dans les commutateurs au sol, ce qui rend les dispositifs connus insuffisamment robustes.

La présente invention vise à répondre à cet inconvénient en proposant un dispositif de détection de présence d'un véhicule à très haut niveau de fiabilité et de grande robustesse.

Ce but est atteint selon l'invention grâce à un dispositif de transport comprenant un dispositif d'alimentation externe comprenant un segment de piste, un véhicule électrique comprenant un frotteur apte à venir en contact avec le segment de piste et un dispositif de détection de la présence du véhicule, comportant des moyens de réception de signaux magnétiques ou électromagnétiques émis par un véhicule au voisinage de ces moyens de réception, le dispositif de détection comportant des moyens de reconnaissance pour identifier parmi les signaux reçus ceux formés d'un signal porteur ayant une fréquence prédéterminée et dont l'amplitude varie selon un signal codé prédéterminé, le véhicule comprenant un moyen de déclaration de présence formé d'un émetteur magnétique ou électromagnétique apte à émettre un signal constitué d'un signal porteur à la fréquence choisie et dont l'amplitude varie selon le signal codé choisi, le dispositif de détection comprenant également un moyen apte à émettre vers le véhicule un signal de retour indiquant que le véhicule a été détecté, et le véhicule comprenant un récepteur apte à identifier le signal de retour émis par le dispositif de détection, caractérisé en ce que le véhicule comprend un commutateur qui est apte à déconnecter le moteur du véhicule du segment de piste lorsque le signal de retour indiquant que le véhicule a été détecté disparaît ou n'est pas présent.

Des dispositions avantageuses apparaissent dans les revendications dépendantes, et notamment :
- le dispositif de détection comporte des moyens de reconnaissance du signal codé prédéterminé et un filtre séquentiel placé en amont de ces moyens de reconnaissance de sorte que les moyens de reconnaissance n'examinent que les signaux ayant une fréquence proche de celle du signal porteur.
- les moyens de reconnaissance comprennent un monostable placé de manière à recevoir un signal de présence représentatif du champ capté par les moyens de réception, présentant un seuil de déclenchement choisi inférieur à un pic d'oscillation maximale d'un tel signal de présence, et prévu pour conserver cet état activé après franchissement du seuil à la baisse pendant au moins le temps nécessaire à une telle oscillation maximale pour remonter au-dessus du seuil.
- le dispositif comprend un moyen pour comparer un signal capté et éventuellement traité à une séquence numérique choisie, caractéristique dudit signal codé.
- la séquence numérique choisie prend deux états distincts au cours du temps, un état haut et un état bas.
- le dispositif comporte deux organes aptes chacun à réaliser une comparaison du signal capté et éventuellement traité avec ladite séquence numérique choisie, et le résultat de chacune de ces deux comparaisons est transmis à un moyen de vérification de cohérence apte à commander une coupure d'un moyen d'alimentation de véhicule dans le cas où les résultats ne sont pas concordants.
- les deux décodeurs sont prévus pour délivrer des signaux indicateurs de la présence du véhicule qui sont de forme différente l'une de l'autre, et le module de vérification de cohérence possède des moyens aptes à reconnaître spécifiquement chacun de ces deux signaux indicateurs.
- les moyens de vérification de la cohérence comprennent deux relais commandés respectivement par les deux décodeurs et deux branches parallèles encadrées par deux bascules chacune apte à contacter l'une ou l'autre des deux branches parallèles, chaque bascule étant commandée par respectivement un des deux relais.

On propose également un dispositif d'alimentation extérieure de véhicule électrique comportant une ligne d'alimentation, une série de segments de piste de contact découverts et isolés entre eux, une série de dispositifs de détection et une série de commutateurs aptes à relier sélectivement les segments de piste à la ligne d'alimentation sous la commande des dispositifs de détection, et dans lequel la série de commutateurs et la série de détecteurs sont parcourues par un fil pilote relié à un disjoncteur apte à couper la ligne d'alimentation lorsque la continuité du fil pilote n'est plus assurée, et dans lequel un commutateur et un détecteur associés à un même segment de piste comportent des moyens pour interrompre la continuité du fil pilote lorsque le commutateur alimente le segment et que le véhicule n'est pas détecté au-dessus de ce segment.

On propose également un dispositif d'alimentation extérieure de véhicule électrique comportant une ligne d'alimentation, une série de segments de piste de contact découverts et isolés entre eux, une série de dispositifs de détection et une série de commutateurs aptes à relier sélectivement les segments de piste à la ligne d'alimentation sous la commande des dispositifs de détection, et dans lequel la série de commutateurs et la série de détecteurs sont parcourues par un fil pilote relié à un disjoncteur apte à couper la ligne d'alimentation lorsque la continuité du fil pilote n'est plus assurée, et dans lequel un segment de piste est couplé à des moyens aptes à comparer le potentiel du segment à un potentiel de référence et à commander une interruption de la continuité du fil pilote lorsqu'aucun véhicule n'est détecté au-dessus du segment et que le potentiel du segment est supérieur au potentiel de référence.

Selon des dispositions avantageuses mais non limitatives :
- le dispositif comprend une ligne de retour de courant, et les commutateurs sont chacun aptes à relier un segment de piste ou bien à la ligne d'alimentation ou bien à la ligne de retour, et les moyens pour comparer le potentiel du segment à un potentiel de référence comprennent une branche reliant la ligne de retour au segment parallèlement au commutateur associé au segment, cette branche portant en série une commande d'un contacteur du fil pilote qui est commandée en courant, une diode montée passante de la ligne de retour vers le segment et une source de tension dont la borne positive est placée côté segment.
- le moyen de vérification de cohérence commande un interrupteur disposé sur ladite branche.
- le fil pilote comprend deux branches parallèles s'étendant entre deux bascules qui sont commandées respectivement par le détecteur et le commutateur d'un même segment de piste, de telle façon que la continuité du fil pilote n'est assurée que pour des positions des deux bascules correspondant aux situations où :
   - le véhicule n'est pas détecté face au segment et le segment n'est pas alimenté ;
   - le véhicule est détecté face au segment et le segment est alimenté.
- le dispositif comprend un moyen apte à émettre vers le véhicule un signal de retour indiquant que le véhicule a été détecté.
- le véhicule électrique à captation d'alimentation extérieure comprend un moyen de déclaration de présence formé d'un émetteur magnétique ou électromagnétique apte à émettre un signal constitué d'un signal porteur de fréquence choisie et dont l'amplitude varie selon un signal codé choisi.
- le véhicule comprend un générateur d'une séquence numérique constituant le signal codé.
- la séquence numérique prend deux états distincts au cours du temps, un état haut et un état bas.
- le véhicule comprend un commutateur recevant sur deux entrées respectivement le signal porteur et la séquence numérique de déformation d'amplitude, et le commutateur délivre en sortie, selon l'état haut ou bas de la séquence numérique, ou bien le signal porteur ou bien un signal plat.
- le véhicule comporte un frotteur apte à venir en contact avec un segment de piste d'un dispositif d'alimentation externe, un récepteur apte à identifier un signal émis par le dispositif d'alimentation externe, et un commutateur qui est apte à déconnecter du frotteur d'alimentation le moteur électrique du véhicule en fonction du signal reçu du dispositif d'alimentation externe.
- le véhicule comporte des moyens de transmission de données autres qu'une indication de présence, entre le véhicule et le sol, lesdites données étant incluses dans le signal codé.
- lesdites données autres qu'une indication de présence comprennent des données d'identification du véhicule.

Le dispositif comprend des moyens d'identification et de mémorisation de données émises par un véhicule, comprises dans le signal codé, et autres qu'une indication de présence.

D'autres caractéristiques, buts et avantages de l'invention apparaîtront à la lecture de la description détaillée qui va suivre, faite en référence aux figures annexées sur lesquelles :
- la figure 1 est une vue de côté d'un dispositif d'alimentation par le sol conforme à l'invention ;
- la figure 2 est un tracé d'un signal de modulation conforme à la présente invention ;
- les figures 3a à 3c représentent des portions du même signal de modulation, représentatives respectivement des valeurs 1, en l'air, et 0 ;
- la figure 4 représente une série de trois séquences du même signal de modulation conforme à l'invention ;
- la figure 5 représente une portion d'un signal de présence émis par le véhicule, conforme à l'invention conforme à l'invention ;
- la figure 6 représente en parallèle un signal généré par le véhicule et le signal déduit par le détecteur au sol à partir du signal émis par le véhicule.
- la figure 7 représente sous forme de blocs fonctionnels un émetteur embarqué et un détecteur de présence conformes à la présente invention ;
- la figure 8 représente un assemblage d'alimentation de véhicule électrique comportant un fil pilote, selon l'invention ;
- la figure 9 représente un montage de fil pilote au niveau d'un commutateur et d'un détecteur selon l'invention ;

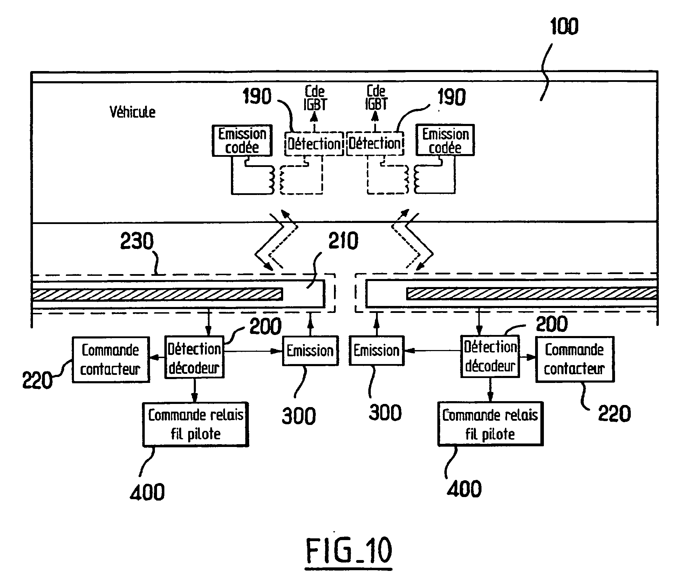

- la figure 10 représente sous forme de blocs fonctionnels des dispositifs d'émission et de détection d'un signal de retour, allant d'un dispositif d'alimentation extérieure vers un véhicule, selon l'invention ;
- la figure 11 représente un montage de détecteur à deux décodeurs conforme au dispositif de la figure 7, sur lequel sont détaillés des modules de sécurité et de cohérence.

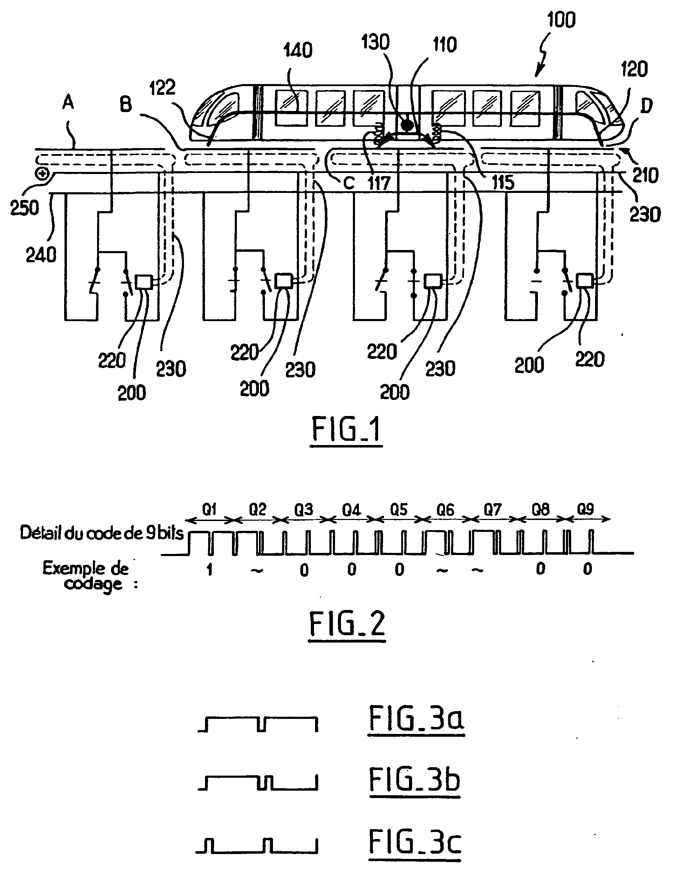

L'assemblage d'alimentation pour véhicule électrique de la figure 1 comprend une piste d'alimentation formée d'une série de segments conducteurs 210 isolés entre eux et affleurant à la surface de la chaussée. Le long de cette série de segments s'étendent une ligne d'alimentation 250 maintenue en permanence à une tension de 750 V ainsi qu'une ligne de retour 240.

Chaque segment 210 de la piste est couplé à un ensemble comprenant un détecteur 200 et un commutateur 220 apte à relier sélectivement le segment considéré à la ligne d'alimentation 250 ou à la ligne de retour 240 selon qu'un véhicule est présent ou non au dessus du segment considéré.

Chacun de ces ensembles détecteur 200/commutateur 220 comprend une boucle conductrice 230 entourant à chaque fois un segment de piste 210.

On a également représenté sur la figure 1 un véhicule électrique 100 qui comprend deux frotteurs de captation 110 placés au contact de la chaussée en partie centrale du véhicule et qui comprend également deux frotteurs 120 et 122 de retour de courant placés aux extrémités avant et arrière du véhicule, ainsi qu'un moteur électrique 130 disposé entre les frotteurs de captation 110 et les frotteurs de retour 120.

Le véhicule 100 présente également deux bobines émettrices 115 et 117 placées de part et d'autre du couple des frotteurs de captation 110 en partie centrale du véhicule, chacune à côté d'un frotteur positif 110. Ces bobines émettent chacune un champ magnétique vers le sol selon un signal de forme choisie, qui sera décrit par la suite.

Lorsqu'une boucle 230 est traversée par ce signal magnétique de forme choisie, le dispositif de reconnaissance 220 détecte la présence du véhicule, et plus particulièrement la présence imminente ou actuelle des frotteurs de captation 110 du véhicule sur le segment de piste 210 entouré par cette boucle 230, et le commutateur 200 relie le segment 210 à la ligne d'alimentation 250.

Au contraire, lorsqu'une boucle 230 n'est pas traversée par ce signal spécifique, le détecteur 220 associé à la boucle diagnostique l'absence de frotteur de captation 110 au dessus du segment de piste 210 et connecte ce segment à la ligne de retour 240. Chaque segment 210 est donc utilisé alternativement pour l'amenée et le retour de courant en fonction de la position du véhicule.

Comme on peut le constater sur la figure 1, les frotteurs de retour de courant 120 et 122 sont placés suffisamment loin des bobines émettrices 115 et 117 sur le véhicule pour que ces frotteurs 120 et 122 ne puissent venir au contact que de segments éloignés des bobines, et donc reliés à la ligne de retour 240.

On détaillera maintenant la nature du signal émis par les bobines 115 et 117 ainsi que les moyens de détection au sol aptes à détecter de manière particulièrement fiable ce signal choisi.

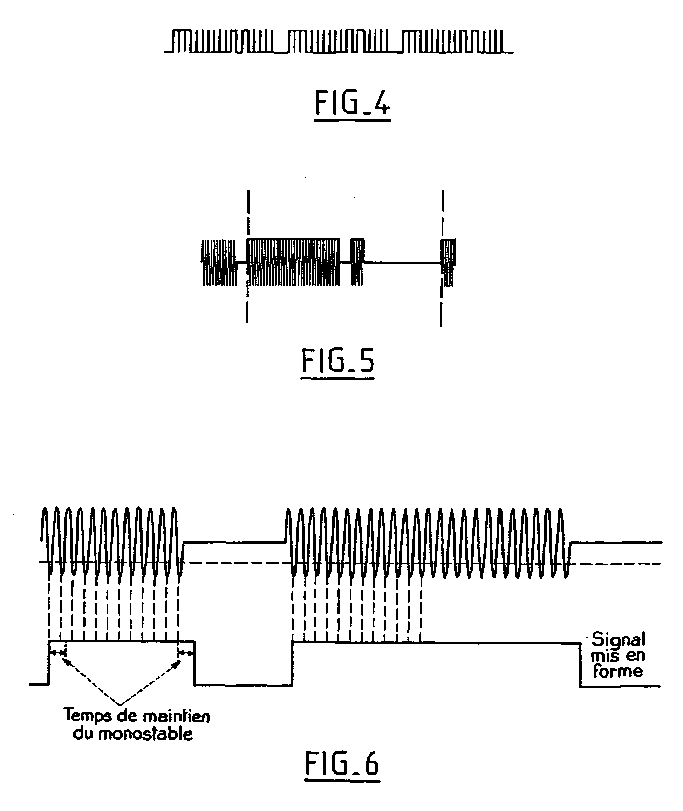

A la figure 5, on a représenté en trait fin le signal effectivement émis par le véhicule et en trait gras l'amplitude de ce signal, formée par un signal utile de fréquence faible. Ce signal effectivement émis est formé d'un signal porteur de fréquence élevée qui est modulé en amplitude par un signal utile de fréquence beaucoup plus lente. En d'autres termes, le signal émis par le véhicule peut être considéré comme le produit d'un signal de fréquence et d'amplitude constantes multiplié par un signal utile de forme spécifique, ce signal utile évoluant selon des fréquences faibles par rapport à la fréquence du signal porteur.

Ce signal utile présente ici la forme représentée en gras sur la figure 5 et représentée plus particulièrement sur les figures 2 à 4.

Ce signal utile est un signal de type carré qui oscille entre deux valeurs fixes appelées par la suite « valeur haute » et « valeur basse ». Ce signal utile constitué comme une suite d'états haut et bas est ici généré par une source numérique.

Plus précisément, le signal prend une succession de valeurs haute et basse selon des enchaînements qui seront reconnus comme significatifs. Ainsi, la forme de la portion de signal utile représentée à la figure 3a sera reconnue comme représentant la valeur 1 et les formes des figures 3b et 3c comme représentatives respectivement des valeurs « en l'air » et 0.

Ainsi, le signal utile oscille entre deux états, un état haut et un état bas, selon une série de portions de signal qui représentent chacune une des trois valeurs distinctes 0, en l'air et 1. Un tel signal prend alternativement ces trois valeurs selon une séquence choisie qui constitue un code numérique. Le signal utile forme ici une séquence de 9 valeurs choisies parmi les valeurs 0, en l'air et 1, le générateur numérique produisant de manière répétitive cette séquence de 9 valeurs.

Pour représenter ces trois valeurs, chacune des portions des figures 3a à 3c se divise en deux moitiés sur chacune desquelles le signal reste fixé à l'état haut ou à l'état bas. La valeur codée par chaque portion est définie de la façon suivante :
- si les deux moitiés sont à l'état haut, on considère que la portion a la valeur 1 ;
- si les deux moitiés prennent respectivement les états haut et bas, on considère que la portion a la valeur « en l'air » ;
- si les deux moitiés prennent l'état bas, on considère que la portion a la valeur 0 ;

Pour séparer les moitiés de portions entre elles, au sein d'une portion ou entre deux portions consécutives, le signal utile prend au moins une fois l'état opposé à chacun de ceux pris sur les moitiés à séparer.

Ainsi, sur la figure 5, on a représenté entre deux séries de tirets verticaux un couple de deux moitiés formant une portion, et on a représenté partiellement les portions voisines de celle-ci. Le deux moitiés de la portion représentée entièrement prennent respectivement les valeurs haute et basse.

Dans l'exemple décrit ici, le signal porteur a une fréquence F1 de 633 kHz et le signal utile se compose d'un ensemble de fréquences principales inférieures à 0,4 kHz.

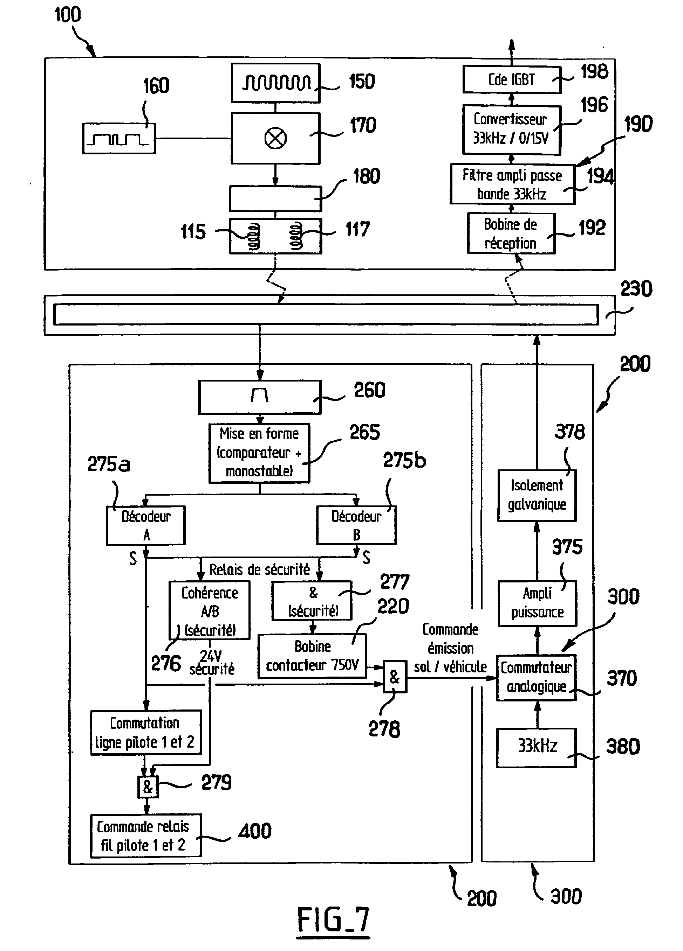

On a représenté sur la figure 7 les éléments essentiels constituant le dispositif d'émission embarqué sur le véhicule 100 ainsi que ceux constituant le dispositif de détection 200 associé à un segment de piste 210.

L'émetteur embarqué comprend un générateur 150 fournissant le signal porteur et un générateur de signaux numériques 160, également appelé « codeur », qui fournit la séquence utile précédemment décrite. Le générateur numérique 160 comporte en mémoire la séquence de 9 valeurs ou 9 bits à générer et transforme ce code en une série de signaux carrés telle que ceux des figures 2 et 4. Entre le générateur analogique de signal porteur 150 et le codeur 160 est placé une porte ou commutateur analogique 170 qui laisse passer le signal analogique porteur lorsqu'il reçoit du codeur 160 un état haut, et délivre un signal nul lorsqu'il reçoit du codeur 160 un état bas. Du fait que ce signal utile oscille entre les états bas et haut selon une forme carrée, ce commutateur 170 réalise en d'autres termes une multiplication du signal porteur avec le signal utile.

Le signal codé obtenu en sortie de ce commutateur 170 est donc un signal alternatif déformé en amplitude selon un signal de déformation variant en tout ou rien selon une séquence représentant un code de 9 valeurs prédéterminé.

Ce signal de sortie est transmis à un amplificateur 180 qui transmet à son tour ce signal sur chacune des deux bobines 115 et 117 du véhicule.

Le détecteur au sol comprend un filtre passe-bande 260 relié directement à la boucle 230. Ce filtre 260 ne laisse passer que des fréquences se trouvant dans une gamme voisine de la fréquence de la porteuse, c'est à dire les fréquences voisines de 633 kHZ.

En aval du filtre passe-bande 260 est disposé un module 265 de mise en forme apte à extraire, à partir du signal à 633 kHz modulé en amplitude, le signal correspondant de modulation d'amplitude.

Ce module de mise en forme 265 est formé d'un monostable qui fournit un signal à 0 en position de repos et un signal à 1 en position d'activation.

Ce monostable 265 adopte sa position d'activation lorsqu'il reçoit en entrée une valeur supérieure à un seuil qui est ici fixé aux trois quarts de l'amplitude maximale du signal électrique généré en sortie du filtre passe-bande 260 en cas de présence du véhicule.

Le monostable passe donc en position d'activation aux instants où, le signal utile de modulation étant à l'état haut, l'oscillation de la porteuse approche de son maximum.

Le monostable adopté ici est en outre conçu pour conserver sa position active pendant une durée fixée au delà de l'instant où le signal en entrée du monostable repasse en-dessous du seuil. Cette durée est ici choisie légèrement supérieure à la durée d'une période d'oscillation du signal porteur.

De cette façon, lorsque le signal d'entrée présente une enveloppe à l'état haut, le monostable n'a pas le temps de repasser en position de repos entre l'instant où une oscillation franchit le seuil de déclenchement à la baisse et l'instant où cette même oscillation repasse ce seuil à la hausse. Le signal de sortie du monostable reste donc constant à 1 pendant toute la période où l'enveloppe du signal reçu reste au niveau haut.

A l'inverse, lorsque le signal transmis au monostable par le filtre passe-bande présente une amplitude nulle, c'est à dire où l'enveloppe du signal est au niveau bas, le monostable reste dans sa position de repos.

Le monostable commute donc entre ses niveaux de sortie haut et bas de manière synchronisée avec l'enveloppe de modulation de la porteuse. Il extrait donc du signal reçu une séquence de commutations semblable à celle générée par la source numérique 160 du véhicule.

Cette séquence est dupliquée et transmise à deux décodeurs parallèles 275a et 275b qui ont un même rôle de reconnaissance du code à 9 bits spécifique du véhicule.

Le dispositif fait donc appel à une reconnaissance d'un signal codé mais il ne réalise un tel décodage que sur des signaux particuliers. Le dispositif ne reconnaît donc que les signaux utiles formant le code en mémoire et modulés par une porteuse à 633 kHz. Par le choix d'une fréquence particulière pour la porteuse des signaux, couplée à un décodage complexe, on obtient un niveau de sécurité particulièrement élevé.

Les deux décodeurs 275a et 275b délivrent tous deux un signal nul en l'absence de reconnaissance du code. Par contre, ils délivrent chacun un signal spécifique en cas de présence du véhicule.

Le décodeur 275a délivre un signal constant à 1 et le décodeur 275b délivre un signal carré de période fixée en cas de détection du véhicule.

En aval des décodeurs sont placés deux modules 276 et 277 de comparaison recevant chacun les signaux de sortie des deux décodeurs. Le module 276 compare les signaux reçus et délivre un signal positif seulement en présence de deux signaux indiquant un même résultat de détection ou de non-détection. Le module 277 ne délivre lui un signal positif qu'en présence de deux signaux de détection en sortie des deux décodeurs 275a et 275b.

Du fait que les deux décodeurs 275a et 275b délivrent des signaux de détection de forme différente l'une de l'autre, une obtention accidentelle de deux signaux positifs en sortie des deux décodeurs sans présence du véhicule, ne peut pas être obtenue même en cas de panne des deux décodeurs. Les deux décodeurs ayant des modes d'émission différents, il est très improbable d'obtenir par disfonctionnement des deux décodeurs un couple de signaux correspondant chacun à une détection de présence du véhicule.

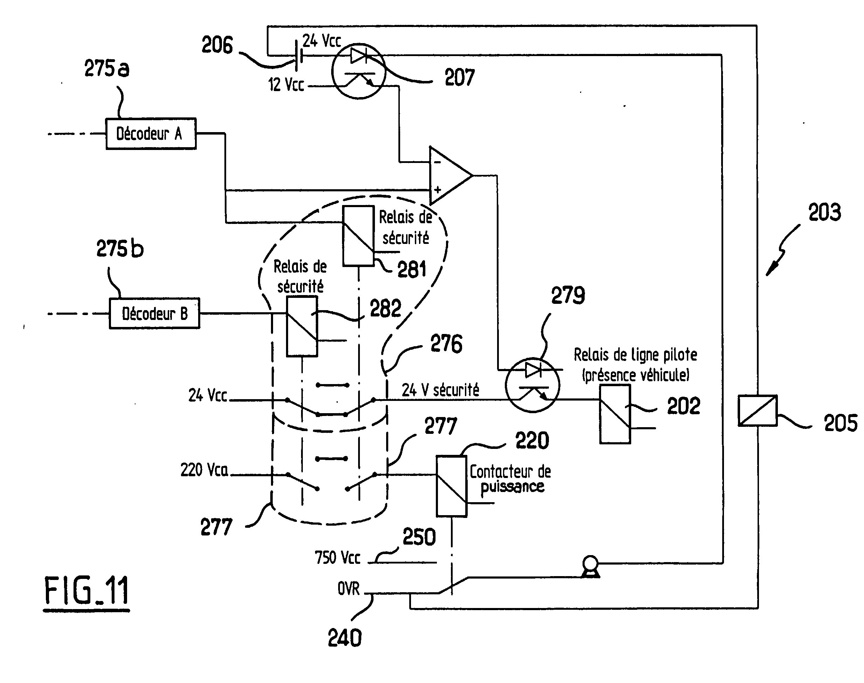

Comme on peut le voir sur la figure 11, le module de vérification de cohérence 276 comprend deux bascules en série dont les extrémités mobiles sont aptes à venir au contact des extrémités de deux segments parallèles, dont l'extrémité fixe de l'une est reliée à un générateur continu à 24 V. Il comprend également deux relais 281, 282 commandés respectivement par le décodeur 275a et le décodeur 275b. L'extrémité fixe de l'autre bascule délivre donc un signal positif ou nul selon la cohérence ou non des positions des deux bascules, c'est à dire seulement si les deux décodeurs donnent un même résultat de détection.

Le module 277 comprend lui, deux bascules en série, aptes à basculer chacune entre une position de contact avec une extrémité d'un même segment et une position en l'air.

Ces deux bascules sont, là encore, commandées par les relais 281 et 282. Une des bascules étant reliée à un générateur, l'autre bascule ne transmet un potentiel positif qu'en cas d'activation simultanée des relais 281 et 282.

En sortie de ce module 277 est placé le contacteur de puissance 220. Le contacteur 220 est équipé de moyens produisant un signal positif de fermeture qui est transmis à un module 278 en parallèle du signal fourni par le décodeur 275a. Le module 278 vérifie la positivité de ces deux signaux à la fois et commande dans un tel cas à un émetteur 300 d'émettre un signal de retour vers le véhicule.

Le signal de sortie du module 276 de vérification de cohérence est transmis sur une première entrée d'un module 279 dont la seconde entrée reçoit le signal de sortie du décodeur 275a. Le module 279 ne délivre un signal positif qu'en présence de signaux positifs sur ses deux entrées, c'est à dire lorsque le décodeur 275a détecte un véhicule et que le module 276 constate la cohérence entre les signaux de sortie des deux décodeurs 275a et 275b.

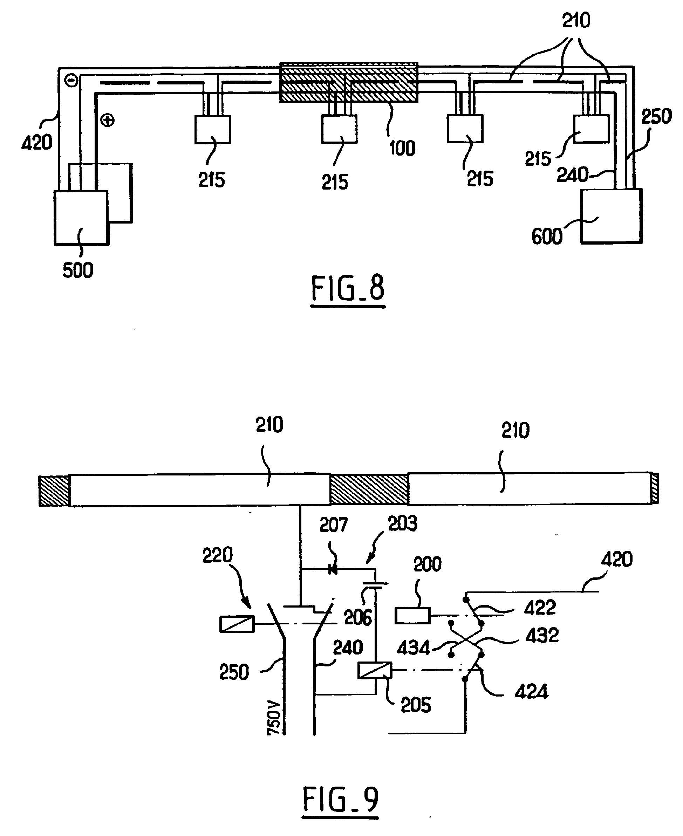

Dans ce cas, le module 279 commande un relais de fil pilote 400, comme il le sera décrit par la suite en rapport à la figure 9.

Selon une disposition avantageuse de l'invention, le code à 9 bits peut être utilisé à la fois pour la détection de présence du véhicule, par exemple par la reconnaissance d'une séquence particulière codée sur les cinq premiers bits et également pour la transmission de données spécifiques, par exemple de données d'identification de véhicules particuliers parmi une flotte de véhicules alimentés par le dispositif, ces données spécifiques pouvant être par exemple codées sur les quatre derniers bits.

Plus généralement, le dispositif de détection selon l'invention peut être utilisé pour une transmission d'informations, notamment d'informations codées numériquement, entre le véhicule et le sol dans le sens allant du véhicule vers le sol ou dans le sens de retour allant du sol vers le véhicule. De telles transmissions peuvent être utiles pour mémoriser des informations sur les passages et les horaires de passage de chacun des différents véhicules de la flotte alimentée selon l'invention.

Le détecteur 200 et le commutateur 220 sont ici d'une grande fiabilité quant à une éventuelle défaillance d'un de leurs éléments constitutifs.

Toute défaillance d'un des composants décrits ci-dessous se traduira par un comportement sécuritaire de non-détection de véhicule et par le maintien du segment de piste associé 210 au potentiel négatif.

En ce qui concerne le contacteur de puissance 220, la seule défaillance pouvant avoir lieu est un soudage d'un de ses contacts. Cette défaillance, susceptible d'occurrence seulement au moment de la libération du segment 210 par le véhicule, est traitée par des dispositions exposées ci-après.

En effet, conformément à l'invention, on améliore encore le niveau de fiabilité du dispositif d'alimentation par les dispositions suivantes.

Comme on peut le voir sur la figure 8, des coffrets 215 de détection et de commande sont disposés le long de la série de segments 210 à raison d'un coffret par couple de segments 210. Chacun de ces coffrets 215 comprend des aménagements de détection de la présence d'un des émetteurs 115 et 117 du véhicule au dessus d'une boucle 230 et des aménagements de commutation 220 de chacun des segments 210 avec ou bien la ligne d'alimentation 250 ou bien la ligne de retour 240.

Le long de la série de segments 210 circule également un fil pilote 420 qui est couplé à chacun des détecteurs 200 et des commutateurs 220 placés dans les coffrets 215. Ce fil pilote 420 s'étend le long d'une série de segments d'alimentation 210 qui est située entre deux sous-stations d'alimentation 500 et 600. Les deux sous-stations 500 et 600 sont reliées aux extrémités respectives du fil pilote 420 et sont équipées de disjoncteurs aptes à couper l'alimentation de la portion de ligne d'alimentation 250 située entre ces sous-stations lorsque la continuité du fil pilote 420 est interrompue. Le fil pilote 420 doit donc présenter à tout moment une continuité électrique d'une sous-station à l'autre pour que l'alimentation soit maintenue entre ces deux sous-stations.

On notera en outre que le véhicule porte deux patins de retour de courant 120 et 122 éloignés l'un de l'autre et reliés électriquement entre eux. L'un des patins 122 étant monté à l'extrémité arrière du véhicule, si un segment reste alimenté accidentellement après le départ du frotteur 110, un tel segment est relié à la ligne de retour 240 par l'intermédiaire du frotteur arrière 122 relié au frotteur avant 120, qui est relié à la ligne de retour de sorte qu'un court-circuit prend place entre le segment arrière alimenté accidentellement et un segment avant relié à la ligne de retour 240. Il se produit là encore une disjonction d'une des sous-stations encadrantes 500 et 600.

A la figure 9, on a représenté plus précisément deux segments consécutifs 210 avec, pour l'un de ces segments 210, un schéma fonctionnel représentant le couplage du fil pilote 420 avec le détecteur de véhicule 200 et le commutateur d'alimentation 220 associés à ce segment.

Comme on le voit sur cette figure 9, le fil pilote 420 forme, au niveau de ce détecteur 200 et de ce commutateur 220, un couple de bascules 422 et 424 placées aux extrémités respectives d'un couple de branches électriques parallèles 432 et 434. Chacune des branches 432 et 434 débouche par une de ses extrémités au niveau de l'extrémité mobile d'une des deux bascules 422 et 424. Le point de rotation de chacune de ces bascules est, lui, en contact électrique permanent avec l'un des deux tronçons de ligne pilote s'éloignant ou arrivant sur ces deux branches parallèles 432 et 434. Ainsi, la continuité du fil pilote 420 n'est assurée que pour des positions correspondantes l'une à l'autre des deux bascules 422 et 424. En effet, pour que la continuité du fil pilote 420 soit assurée, les deux bascules 422 et 424 doivent être en contact avec les deux extrémités d'une même branche parmi les deux branches parallèles 432 et 434.

Conformément à l'invention, la première bascule 422 est commandée par le détecteur de présence 200 et la seconde bascule 424 est commandée par le commutateur 220 reliant le segment 210 à la ligne d'alimentation à 750 volts 250. Ainsi, la continuité du fil pilote 420 ne peut être assurée au niveau d'un couple détecteur 200 / commutateur 220 que dans les deux cas suivants, correspondant à des positions associées des deux bascules :
- présence d'un émetteur 115 ou 117 du véhicule 100 détectée au-dessus du segment 210 et segment 210 alimenté ;
- pas d'émetteur 115 ou 117 du véhicule détecté au dessus du segment 210 et segment relié à la ligne de retour 240.

En d'autres termes, le fil pilote 420 est interrompu notamment dans le cas où un segment 210 est alimenté sans qu'un émetteur 115 ou 117 du véhicule soit détecté au dessus de ce segment. Dans ce cas, la disjonction de l'ensemble des segments compris entre les deux sous-stations 500 et 600 intervient quasi-immédiatement.

Un tel cas de défaillance peut se produire lors d'un soudage d'un contact du commutateur 220 et également si un isolement entre le segment considéré et un segment voisin n'est accidentellement plus assuré, ce segment voisin étant alimenté car en contact avec le patin de captation 110.

Un autre cas de disjonction est celui où un émetteur 115 ou 117 du véhicule est détecté au-dessus du segment 210 mais où le segment n'est pas alimenté.

On notera sur la figure 9 que la bascule 424 est commandée par un relais 205 piloté en courant qui est placé sur une branche 203 reliant la ligne de retour 240 au segment 210, en parallèle au contacteur 220. Sur cette branche 203 sont également placés en série avec ce relais 205 une source de tension à 24V, référencée 206, dont la borne positive est placée côté segment 210, et une diode 207 montée passante dans le sens allant de la ligne de retour 240 au segment 210.

Cette branche 203 étant montée parallèlement au contacteur 220, ses deux extrémités sont reliés l'une à l'autre par le contacteur 220 dans la situation où il connecte le segment 210 à la ligne de retour 240.

Dans un tel cas, le générateur 206 fait circuler dans la diode 207 et le relais 205 un courant non nul et le relais commande la bascule 424 dans une position correspondant à la position « segment non alimenté ».

A l'inverse, aucun courant ne parcourt cette branche 203 lorsque le segment est à un potentiel supérieur à celui de la source 206. En effet, la diode 207 voit alors sa borne négative portée à un potentiel supérieur à 24V de sorte qu'elle est bloquante.

Elle empêche donc un courant de commande de circuler dans le relais 205, et empêche un court-circuit entre le segment 210 alimenté et la ligne de retour 240.

Dans un tel cas, le relais 205 parcouru par aucun courant commande la bascule 424 en position « segment alimenté ».

Grâce à ce montage, le relais 205 est à l'état « segment alimenté » non seulement lorsque le contacteur 220 ne relie plus le segment 210 à la ligne de retour 240, c'est à dire lorsque la boucle formée par la branche 203 est ouverte, mais également lorsque le potentiel du segment 210 dépasse le potentiel de la ligne de retour 240 augmenté de 24V, par blocage de la diode 207 dans ce cas. C'est le cas notamment dans un cas de défaillance où le segment 210 est alimenté par liaison électrique entre lui et un segment voisin alimenté, par exemple dans le cas d'un défaut d'isolation entre ces segments.

Une telle disposition permet donc une commande de la bascule 424 fidèle à l'état réel d'alimentation ou non du segment 210, quelque soit la cause de l'alimentation de ce segment, puisque c'est le potentiel relevé directement sur ce segment qui est comparé à celui de la ligne de retour 240.

De plus, le module 276, lorsqu'il détecte une incohérence entre les résultats des deux décodeurs, est apte à commander une ouverture de la boucle 203 de la figure 9 par l'intermédiaire d'un interrupteur supplémentaire, non représenté sur la figure 9.

Ainsi, si une incohérence entre les résultats fournis par les deux décodeurs 275a et 275b est détectée alors qu'au moins un des deux détecteurs signale la présence du véhicule, le fil pilote 420 est interrompu.

Plus précisément, le résultat du test de cohérence effectué par l'organe 276 et le résultat du décodage par le décodeur 275a sont tous deux transmis à une porte « et » 279 qui ne commande un actionnement de la bascule 424 que lorsque les deux résultats de ces deux éléments 275a et 276 concordent.

Chaque segment 210 est associé à un dispositif d'émission 300 assurant un accusé de réception du signal de présence émis par le véhicule 100 en retour vers ce même véhicule 100. Ainsi, comme on l'a représenté à la figure 7, le détecteur 200 commande, en plus du contacteur 220 et du relais de fil pilote 400, un émetteur de signal magnétique 300 dirigé vers le dessus du segment 210.

Le signal de présence issu de la porte « et » 278 commande le générateur de signal de retour 300 en direction du véhicule.

Ce générateur 300 présente ici une constitution similaire à celle de l'émetteur du véhicule 100, c'est à dire qu'il comprend un commutateur analogique 370, un générateur de signal porteur 380 à 33 kHz, le commutateur analogique 370 réalisant sur ce signal porteur une déformation en amplitude selon des formes carrées correspondant à un code particulier.

En aval de ce commutateur analogique 370 est disposé un amplificateur de puissance 375 puis un organe d'isolement galvanique 378. Le signal codé de retour est émis par l'intermédiaire de la boucle 230.

Avantageusement, la boucle 230 est constituée de deux fils parallèles isolés entre eux, un fil étant dédié à la détection et l'autre à l'émission du champ magnétique de retour.

Le véhicule 100 est, lui, muni de deux détecteurs 190 aptes à identifier la présence de ce signal de retour.

Cet ensemble de détection 190 comprend successivement une bobine 192 de réception, un filtre amplificateur passe-bande 194 sur la fréquence 33 kHz et un décodeur/convertisseur 196 apte à transformer le signal de retour en un signal de commande continu à 15 V . En aval du convertisseur est placée la commande IGBT précédemment décrite, ici référencée 198.

Le signal de retour peut simplement être formé d'un signal magnétique ou électromagnétique alternatif à 33 kHz, le dispositif de détection embarqué 190 étant apte à détecter la présence ou non de cette fréquence. Dans ce cas, le détecteur 190 est formé de la succession d'éléments suivants : bobine de réception 192/filtre passe-bande à 33 kHz / convertisseur 33 kHz vers signal continu 15V.

Le signal de retour est maintenu pendant la durée de présence des émetteurs 115 et 117 au-dessus du segment 210.

Les détecteurs embarqués 190 commandent le commutateur placé entre les frotteurs de captation d'alimentation 110 du véhicule et le moteur 130 du véhicule. En cas d'une éventuelle défaillance dans la transmission allant du véhicule au sol ou également dans le cas d'une défaillance dans le dispositif au sol, le véhicule ne reçoit pas l'accusé de réception attendu ou bien ce signal de retour disparaît de manière prématurée. Le commutateur embarqué interrompt alors le contact entre les frotteurs de captation 110 et le moteur 130 de manière quasi immédiate, en pratique dans un délai de quelques microsecondes, de sorte que l'ouverture du contacteur 220 susceptible d'être commandée dans un tel cas de défaillance s'effectue après cette coupure du moteur 130 du véhicule. Le contacteur au sol 220 est donc, dans le cas d'une telle défaillance, actionné en l'absence de tout courant à travers lui.

On obtient donc une déconnexion de la charge avant coupure de l'alimentation au sol, protégeant les commutateurs au sol d'une commutation en charge.

Le contacteur au sol 220 est donc protégé contre des arcs électriques qui sont pour lui particulièrement destructeurs. Avantageusement, le commutateur embarqué est, lui, un commutateur IGBT (Isolated Gate Bipolar Transistor en anglais) qui est un semi-conducteur unidirectionnel commandé par une porte, composant de puissance qui présente une robustesse particulière.

Avantageusement, le véhicule comporte deux contacteurs IGBT disposés tête-bêche, l'un pour l'alimentation, l'autre pour la traction du véhicule.

Cette fonction de protection est assurée de manière encore plus fiable du fait que le commutateur IGBT 198 est plus rapide que le commutateur au sol, de sorte que la chaîne formée par les moyens d'émission du signal de retour 300, le récepteur 190 du véhicule et le commutateur 198 du véhicule est suffisamment rapide pour provoquer (en réponse à un signal des dispositifs de commande au sol) une déconnexion du moteur du véhicule avant que le commutateur au sol ne déconnecte le segment de l'alimentation.

Avantageusement, le véhicule ne commande la fermeture du ou des contacteurs IGBT entre le moteur 130 et les frotteurs 110, notamment au départ du véhicule, que lorsqu'il détecte l'accusé de réception. L'accusé de réception n'est envoyé que lorsque le segment 210 correspondant à la boucle 230 est alimenté et le commutateur du véhicule n'est actionné dans son état de conduction qu'après détection du signal de retour par le récepteur 190, de sorte que l'on n'autorise la chaîne de traction à consommer qu'une fois le segment alimenté.

Ainsi, le contacteur 220 ne commute en aucun cas alors que la charge constituée par le moteur du véhicule est reliée à lui.

L'activation d'un segment en présence d'un véhicule s'effectue donc avant connexion de la charge constituée par le moteur de ce véhicule.

Par ailleurs, on adopte une configuration géométrique des boucles de détection 230, des segments 210, des émetteurs 115 et 117 et des frotteurs 110 qui permet d'anticiper l'arrivée des frotteurs 110 par la fermeture du contacteur 220 et de retarder l'ouverture du contacteur 220 par rapport au départ du frotteur 110, de sorte que le contacteur 220 ne commute jamais en charge.

## Revendications

1. Dispositif de transport comprenant un dispositif d'alimentation externe comprenant un segment de piste (210), un véhicule électrique comprenant un frotteur (110) apte à venir en contact avec le segment de piste (210) et un dispositif de détection (200) de la présence du véhicule (100), comportant des moyens de réception (230) de signaux magnétiques ou électromagnétiques émis par un véhicule (100) au voisinage de ces moyens de réception (230), le dispositif de détection comportant des moyens de reconnaissance pour identifier (200) parmi les signaux reçus ceux formés d'un signal porteur ayant une fréquence prédéterminée (F1) et dont l'amplitude varie selon un signal codé prédéterminé, le véhicule comprenant un moyen de déclaration de présence (100) formé d'un émetteur magnétique ou électromagnétique apte à émettre un signal constitué d'un signal porteur à la fréquence choisie (F1) et dont l'amplitude varie selon le signal codé choisi, le dispositif de détection comprenant également un moyen (300) apte à émettre vers le véhicule (100) un signal de retour indiquant que le véhicule (100) a été détecté, et le véhicule comprenant un récepteur (190) apte à identifier le signal de retour émis par le dispositif de détection (200, 220, 250), **caractérisé en ce que** le véhicule comprend un commutateur qui est apte à déconnecter le moteur du véhicule (130) du segment de piste lorsque le signal de retour indiquant que le véhicule a été détecté disparaît ou n'est pas présent.

2. Dispositif de transport selon la revendication 1, **caractérisé en ce que** le dispositif d'alimentation externe comporte un commutateur (220) apte à relier le segment de piste (210) à une ligne d'alimentation (250), et des moyens de commande de ce commutateur (220) en réponse à la détection ou non du véhicule par le dispositif de détection (200), **caractérisé en ce que** les moyens d'émission du signal de retour, le récepteur (190) du véhicule et le commutateur du véhicule sont suffisamment rapides pour provoquer une déconnexion du moteur du véhicule du segment de piste (210) avant que le commutateur du dispositif d'alimentation externe ne déconnecte le segment (210) de la ligne d'alimentation (250).

3. Dispositif selon la revendication 1 ou la revendication 2, **caractérisé en ce que** le moyen d'émission (300) vers le véhicule (100) est prévu pour n'émettre le signal de retour que dans l'état alimenté du segment (210), et le commutateur du véhicule ne passe dans un état de liaison entre le moteur et le segment qu'après la détection du signal de retour par le récepteur (190) du véhicule.

4. Dispositif de transport selon l'une quelconque des revendications précédentes, **caractérisé en ce que** le dispositif de détection comporte des moyens d'identification (265, 270, 275) du signal codé prédéterminé et un filtre fréquentiel (260) placé en amont de ces moyens d'identification de sorte que les moyens d'identification (265, 270, 275) n'examinent que les signaux ayant une fréquence proche de celle du signal porteur (F1).

5. Dispositif selon l'une quelconque des revendications précédentes, **caractérisé en ce que** les moyens de reconnaissance comprennent un monostable (265) apte à recevoir en cas de présence du véhicule un signal de présence représentatif du champ capté par les moyens de réception, le monostable (265) présentant un seuil de passage en son état instable choisi inférieur à un pic d'oscillation maximale d'un tel signal de présence, et prévu pour conserver son état instable après franchissement du seuil à la baisse pendant au moins le temps nécessaire à une telle oscillation maximale pour remonter au-dessus du seuil.

6. Dispositif selon l'une quelconque des revendications précédentes, **caractérisé en ce que** le dispositif de détection comporte deux organes (275a, 275b) aptes chacun à réaliser une comparaison du signal capté et éventuellement traité avec une séquence numérique choisie, et **en ce que** le résultat de chacune de ces deux comparaisons est transmis à un moyen de vérification de cohérence (276) apte à commander une coupure d'un moyen d'alimentation de véhicule dans le cas où les deux résultats ne sont pas concordants.

7. Dispositif selon la revendication 6, **caractérisé en ce que** les deux organes (275a, 275b) sont prévus pour délivrer des signaux indicateurs de la présence du véhicule qui sont de forme différente l'une de l'autre, et **en ce que** le moyen de vérification de cohérence (270) possède des moyens aptes à reconnaître spécifiquement chacun de ces deux signaux indicateurs.

8. Dispositif selon la revendication 6 ou la revendication 7, **caractérisé en ce que** le moyen de vérification de cohérence (276) comprend deux relais (281, 282) commandés respectivement par les deux organes (275a, 275b) et deux branches parallèles encadrées par deux bascules chacune apte à contacter l'une ou l'autre des deux branches parallèles, chaque bascule étant commandée par respectivement un des deux relais (281, 282).

9. Dispositif de transport selon l'une quelconque des revendications précédentes, comportant une ligne d'alimentation (250), une série de segments de piste (210) de contact découverts et isolés entre eux, une série desdits dispositifs de détection (200) et une série de commutateurs (220) aptes à relier sélectivement les segments de piste (210) à la ligne d'alimentation (250) sous la commande des dispositifs de détection (200), **caractérisé en ce que** la série de commutateurs (220) et la série de détecteurs (200) sont parcourues par un fil pilote (420) relié à un disjoncteur (500, 600) apte à couper la ligne d'alimentation (250) lorsque la continuité du fil pilote (420) n'est plus assurée, et **en ce qu'**un commutateur (220) et un détecteur (200) associés à un même segment de piste (210) comportent des moyens pour interrompre la continuité du fil pilote (420) lorsque le commutateur (220) alimente le segment (210) et que le véhicule (100) n'est pas détecté au-dessus de ce segment.

10. Dispositif de transport selon l'une quelconque des revendications précédentes, comportant une ligne d'alimentation (250), une série de segments de piste (210) de contact découverts et isolés entre eux, une série desdits dispositifs de détection (200) et une série de commutateurs (220) aptes à relier sélectivement les segments de piste (210) à la ligne d'alimentation (250) sous la commande des dispositifs de détection (200), **caractérisé en ce que** la série de commutateurs (220) et la série de détecteurs (200) sont parcourues par un fil pilote (420) relié à un disjoncteur (500, 600) apte à couper la ligne d'alimentation (250) lorsque la continuité du fil pilote (420) n'est plus assurée, et **en ce qu'**un segment de piste (210) est couplé à des moyens aptes à comparer le potentiel du segment à un potentiel de référence et à commander une interruption de la continuité du fil pilote lorsqu'aucun véhicule n'est détecté au-dessus du segment (210) et que le potentiel du segment (210) est supérieur au potentiel de référence.

11. Dispositif selon la revendication 10, **caractérisé en ce qu'**il comprend une ligne de retour de courant (240), **en ce que** les commutateurs (220) sont chacun aptes à relier un segment de piste (210) ou bien à la ligne d'alimentation (250) ou bien à la ligne de retour (240), et **en ce que** les moyens pour comparer le potentiel du segment (210) à un potentiel de référence comprennent une branche (203) reliant la ligne de retour (240) au segment (210) parallèlement au commutateur (220) associé au segment (210), cette branche (203) portant en série une commande (205) d'un contacteur du fil pilote (420) qui est commandée en courant, une diode (207) montée passante de la ligne de retour (240) vers le segment (210) et une source de tension (206) dont la borne positive est placée côté segment (210).

12. Dispositif selon la revendication 6, en combinaison avec la revendication 11, **caractérisé en ce que** le moyen de vérification (276) de cohérence commande un interrupteur disposé sur ladite branche (203).

13. Dispositif selon l'une des revendications 9 à 12, **caractérisé en ce que** le fil pilote (420) comprend deux branches parallèles (432, 434) s'étendant entre deux bascules (422, 424) qui sont commandées respectivement par le détecteur (200) et le commutateur (220) d'un même segment de piste (210), de telle façon que la continuité du fil pilote (420) n'est assurée que pour des positions des deux bascules (422, 424) correspondant aux situations où :
- le véhicule (100) n'est pas détecté face au segment (210) et le segment (210) n'est pas alimenté ;
- le véhicule (100) est détecté face au segment (210) et le segment (210) est alimenté.

14. Dispositif de transport selon l'une quelconque des revendications précédentes, **caractérisé en ce que** le véhicule comprend un générateur (600) d'une séquence numérique constituant le signal codé, la séquence numérique prenant deux états distincts au cours du temps, un état haut et un état bas, et **en ce que** le véhicule comprend un commutateur (170) recevant sur deux entrées respectivement le signal porteur et la séquence numérique de déformation d'amplitude, le commutateur (170) délivrant en sortie, selon l'état haut ou bas de la séquence numérique, ou bien le signal porteur ou bien un signal plat.

15. Dispositif de transport selon l'une quelconque des revendications précédentes, **caractérisé en ce qu'**il comporte des moyens destinés à la transmission de données du véhicule vers le dispositif de détection externe, ces données étant autres qu'une indication de présence et étant incluses dans le signal codé.

16. Dispositif de transport selon la revendication précédente, **caractérisé en ce que** lesdites données autres qu'une indication de présence comprennent des données d'identification du véhicule.

17. Dispositif selon l'une quelconque des revendications précédentes, **caractérisé en ce que** le dispositif de détection comprend des moyens d'identification et de mémorisation de données émises par un véhicule, comprises dans le signal codé, et autres qu'une indication de présence.

## Claims

1. A transport device, comprising an external supply device comprising a track section (210), an electrical vehicle comprising a brush (110) capable of contacting the track section (210), and a device (200) for detecting the presence of the vehicle (100), having means (230) for receiving magnetic or electromagnetic signals transmitted by a vehicle (100) near the receiving means (230), the detecting device having recognition means for identifying (200) among the signals received those composed of a carrier signal having a predetermined frequency (F1) and the amplitude of which varies according to a predetermined coded signal, the vehicle comprising a presence signaling means (100) composed of a magnetic or electromagnetic transmitter capable of transmitting a signal consisting of a carrier signal at the selected frequency (F1) and the amplitude of which varies depending on the selected coded signal, the detecting device also comprising a means (300) capable of transmitting to the vehicle (100) a feedback signal indicating that the vehicle (100) has been detected, and the vehicle comprising a receiver (190) capable of identifying the feedback signal transmitted by the detecting device (200, 220, 250), **characterized in that** the vehicle comprises a switch, which is capable of disconnecting the motor of the vehicle (130) from the track section when the feedback signal indicating that a vehicle has been detected disappears or is not present.

2. The transport device according to claim 1, **characterized in that** the external supply device comprises a switch (220) capable of connecting the track section (210) to a supply line (250), and means for controlling the switch (220) in response to the detection or non-detection of the vehicle by the detecting device (200), **characterized in that** the means for transmitting the feedback signal, the receiver (190) of the vehicle and the switch of the vehicle are sufficiently fast for causing disconnection of the motor of the vehicle from the track section (210) before the switch of the external supply device disconnects the section (210) from the supply line (250).

3. The device according to claim 1 or claim 2, **characterized in that** the means (300) for transmission to the vehicle (100) is provided for transmitting the feedback signal only in the powered state of the section (210), and the switch of the vehicle transitions to a connecting state between the motor and the section only after the feedback signal has been detected by the receiver (190) of the vehicle.

4. The transport device according to any of the preceding claims, **characterized in that** the detecting device has means (265, 270, 275) for identifying the predetermined coded signal and a frequency filter (260) placed upstream of the identifying means so that the identifying means (265, 270, 275) only examine signals having a frequency close to that of the carrier signal (F1).

5. The device according to any of the preceding claims, **characterized in that** the recognition means comprise a monostable (265) capable of receiving, in case a vehicle is present, a presence signal representing the field picked up by the receiving means, the monostable (265) having a passage threshold in the selected instable state thereof which is lower than a maximum oscillation peak of such a presence signal, and provided to keep the instable state thereof after the threshold has been down-crossed at least for the time required at such a maximum oscillation for the threshold to be up-crossed again.

6. The device according to any of the preceding claims, **characterized in that** the detecting device comprises two members (275a, 275b), each capable of making a comparison of the signal picked up and possibly processed with a selected digital sequence, and **in that** the result of each of both comparisons is transferred to a consistency checking means (276) capable of controlling a cut-off of a vehicle supply means in case both results do not match.

7. The device according to claim 6, **characterized in that** both members (275a, 275b) are provided to output signals indicating the presence of the vehicle, which are shaped differently from each other, and **in that** the consistency checking mans (270) has means capable for specifically recognizing each the two indicator signals.

8. The device according to claim 6 or claim 7, **characterized in that** the consistency checking means (276) comprises two relays (281, 282) respectively controlled by both members (275a, 275b), and two parallel branches framed by two flip-flops, each capable of contacting either of the two parallel branches, each flip-flop being controlled by respectively one of the two relays (281, 282).

9. The transport device according to any of the preceding claims, comprising a supply line (250), a series of contact track sections (210), exposed and insulated with respect to each other, a series of said detecting devices (200), and a series of switches (220) capable of selectively connecting the track sections (210) to the supply line (250) under the control of the detecting devices (200), **characterized in that** the series of switches (220) and the series of detectors (200) are traversed by a pilot wire (420) connected to a circuit breaker (500, 600) capable of cutting off the supply line (250) when the continuity of the pilot wire (420) is no longer ensured, and **in that** a switch (220) and a detector (200) associated with the same track section (210) have means for interrupting the continuity of the pilot wire (420) when the switch (220) supplies the section (210) and the vehicle (100) is not detected over this section.

10. The transport device according to any of the preceding claims, comprising a supply line (250), a series of contact track sections (210), exposed and insulated with respect to each other, a series of said detecting devices (200), and a series of switches (220) capable of selectively connecting the track sections (210) to the supply line (250) under the control of the detecting devices (200), **characterized in that** the series of switches (220) and the series of detectors (200) are traversed by a pilot wire (420) connected to a circuit breaker (500, 600) capable of cutting off the supply line (250) when the continuity of the pilot wire (420) is no longer ensured, and **in that** a track section (210) is coupled to means capable of comparing the potential of the section to a reference potential and controlling an interruption of the continuity of the pilot wire when no vehicle is detected over the section (210), and the potential of the section (210) is greater than the reference potential.

11. The device according to claim 10, **characterized in that** it comprises a current return line (240), **in that** the switches (220) are each capable of connecting a track section (210) either to the supply line (250) or to the return line (240), and **in that** the means for comparing the potential of the section (210) to a reference potential comprise a branch (203) connecting the return line (240) to the section (210) in parallel to the switch (220) associated with the section (210), said branch (203) serially carrying a control (205) of a contactor of the pilot wire (420) which is current-controlled, a diode (207) forward-mounted from the return line (240) to the section (210), and a voltage source (206), the positive terminal of which is placed on the section side (210).

12. The device according to claim 6, in combination with claim 11, **characterized in that** the consistency checking means (276) controls a cutoff switch arranged on said branch (203).

13. The device according to any of claims 9 to 12, **characterized in that** the pilot wire (420) comprises two parallel branches (432, 434) extending between two flip-flops (422, 424), which are controlled respectively by the detector (200) and the switch (220) of the same track section (210), so that the continuity of the pilot wire (420) is measured only for positions of the two flip-flops (422, 424) corresponding to situations, wherein:
- the vehicle (100) is not detected opposite the section (210), and the section (210) is not powered;
- the vehicle (100) is detected opposite the section (210), and the section (210) is powered.

14. The transport device according to any of the preceding claims, **characterized in that** the vehicle comprises a generator (600) of a digital sequence composing the coded signal, the digital sequence adopting two distinct states in time, a high state and a low state, and **in that** the vehicle comprises a switch (170) receiving at both inputs respectively the carrier signal and the digital amplitude distortion sequence, with the switch (170) outputting, depending on the high or low state of the digital sequence, either the carrier signal or a flat signal.

15. The transport device according to any of the preceding claims, **characterized in that** it comprises means for transmitting data from the vehicle to the external detecting device, with the data being different from an indication of presence and being included in the coded signal.

16. The transport device according to the preceding claim, **characterized in that** said data other than an indication of presence comprises identification data of the vehicle.

17. The device according to any of the preceding claims, **characterized in that** the detecting device comprises means for identifying and storing data transmitted by a vehicle, included in the coded signal, and different from an indication of presence.

## Patentansprüche

1. Transportvorrichtung, umfassend eine externe Versorgungsvorrichtung, die einen Spurabschnitt (210) umfasst, ein elektrisches Fahrzeug, das eine Bürste (110) umfasst, die dazu geeignet ist, den Spurabschnitt (210) zu berühren, und eine Vorrichtung (200), um die Anwesenheit eines Fahrzeugs (100) zu erfassen, das über Mittel (230) verfügt zum Empfangen magnetischer oder elektromagnetischer Signale, die von einem Fahrzeug (100) in der Nähe dieser Empfangsmittel (230) gesendet werden, wobei die Erfassungsvorrichtung über Erkennungsmittel verfügt, um aus den empfangenen Signalen diejenigen zu identifizieren (200), die aus einem Trägersignal mit einer vorherbestimmten Frequenz (F1) bestehen, und deren Amplitude sich in Abhängigkeit von einem vorherbestimmten codierten Signal ändert, wobei das Fahrzeug ein Anwesenheitsmeldemittel (100) umfasst, das aus einem magnetischen oder elektromagnetischen Sender besteht, der dazu geeignet ist, ein Signal zu senden, das aus einem Trägersignal auf der gewählten Frequenz (F1) besteht, und dessen Amplitude sich je nach dem gewählten codierten Signal ändert, wobei die Erfassungsvorrichtung auch ein Mittel (300) umfasst, das dazu geeignet ist, an das Fahrzeug (100) ein Rückmeldungssignal zu senden, das angibt, dass das Fahrzeug (100) erfasst wurde, und wobei das Fahrzeug einen Empfänger (190) umfasst, der dazu geeignet ist, das Rückmeldungssignal zu identifizieren, das von der Erfassungsvorrichtung (200, 220, 250) gesendet wird, **dadurch gekennzeichnet, dass** das Fahrzeug einen Schalter umfasst, der dazu geeignet ist, den Motor des Fahrzeugs (130) von dem Spurabschnitt zu trennen, wenn das Rückmeldungssignal, das angibt, dass ein Fahrzeug erfasst wurde, aufhört oder nicht vorliegt.

2. Transportvorrichtung nach Anspruch 1, **dadurch gekennzeichnet, dass** die externe Versorgungsvorrichtung einen Schalter (220), der dazu geeignet ist, den Spurabschnitt (210) mit einer Versorgungsleitung (250) zu verbinden, und Mittel zum Steuern dieses Schalters (220) als Reaktion auf die Erfassung oder Nichterfassung des Fahrzeugs durch die Erfassungsvorrichtung (200) umfasst, **dadurch gekennzeichnet, dass** das Mittel zum Senden des Rückmeldungssignals, der Empfänger (190) des Fahrzeugs und der Schalter des Fahrzeugs schnell genug sind, um eine Trennung des Motors des Fahrzeugs von dem Spurabschnitt (210) zu bewirken, bevor der Schalter der externen Versorgungsvorrichtung den Abschnitt (210) von der Versorgungsleitung (250) trennt.

3. Vorrichtung nach Anspruch 1 oder Anspruch 2, **dadurch gekennzeichnet, dass** das Mittel (300) zum Senden an das Fahrzeug (100) bereitgestellt wird, um das Rückmeldungssignal nur in dem versorgten Zustand des Abschnitts (210) zu senden, und der Schalter des Fahrzeugs nur in einen Verbindungszustand zwischen dem Motor und dem Abschnitt übergeht, nachdem das Rückmeldungssignal von dem Empfänger (190) des Fahrzeugs erfasst wurde.

4. Transportvorrichtung nach einem der vorhergehenden Ansprüche, **dadurch gekennzeichnet, dass** die Erfassungsvorrichtung über Mittel (265, 270, 275) zum Identifizieren des vorherbestimmten codierten Signals und einen Frequenzfilter (260), der oberhalb dieser Identifizierungsmittel angeordnet ist, so dass die Identifizierungsmittel (265, 270, 275) nur Signale untersuchen, die eine Frequenz in der Nähe derjenigen des Trägersignals (F1) aufweisen, verfügt.

5. Vorrichtung nach einem der vorhergehenden Ansprüche, **dadurch gekennzeichnet, dass** die Erkennungsmittel ein Monoflop (265) umfassen, das dazu geeignet ist, falls das Fahrzeug anwesend ist, ein Anwesenheitssignal zu empfangen, welches das Feld darstellt, das von den Empfangsmitteln aufgenommen wird, wobei das Monoflop (265) eine Übergangsschwelle in seinem ausgewählten instabilen Zustand aufweist, die geringer gewählt wird als eine maximale Schwingungsspitze eines derartigen Anwesenheitssignals, und bereitgestellt wird, um seinen instabilen Zustand, nachdem die Schwelle nach unten überschritten wurde, mindestens für die Dauer, die bei einer derartigen maximalen Schwingung notwendig ist, um die Schwelle wieder nach oben zu überschreiten, beizubehalten.

6. Vorrichtung nach einem der vorhergehenden Ansprüche, **dadurch gekennzeichnet, dass** die Erfassungsvorrichtung zwei Organe (275a, 275b) umfasst, die jeweils dazu geeignet sind, einen Vergleich des aufgenommenen und gegebenenfalls verarbeiteten Signals mit einer ausgewählten Digitalsequenz vorzunehmen, und dass das Ergebnis eines jeden der beiden Vergleiche an ein Kohärenzüberprüfungsmittel (276) übertragen wird, das dazu geeignet ist, ein Abschalten eines Fahrzeugversorgungsmittels zu steuern, falls die beiden Ergebnisse nicht übereinstimmen.

7. Vorrichtung nach Anspruch 6, **dadurch gekennzeichnet, dass** die beiden Organe (275a, 275b) bereitgestellt werden, um Signale abzugeben, welche die Anwesenheit des Fahrzeugs anzeigen, die jeweils unterschiedlich geformt sind, und dass das Kohärenzüberprüfungsmittel (270) Mittel besitzt, die dazu geeignet sind, jedes dieser beiden Anzeigesignale spezifisch zu erkennen.

8. Vorrichtung nach Anspruch 6 oder Anspruch 7, **dadurch gekennzeichnet, dass** das Kohärenzüberprüfungsmittel (276) zwei Relais (281, 282), die jeweils von den beiden Organen (275a, 275b) gesteuert werden, und zwei parallele Stränge, die von zwei Flipflops eingerahmt sind, die jeweils dazu geeignet sind, den einen oder anderen der beiden parallelen Stränge zu berühren, umfasst, wobei jedes Flipflop durch jeweils eines der beiden Relais (281, 282) gesteuert wird.

9. Transportvorrichtung nach einem der vorhergehenden Ansprüche, umfassend eine Versorgungsleitung (250), eine Reihe von freiliegenden und voneinander isolierten Kontaktspurabschnitten (210), eine Reihe der Erfassungsvorrichtungen (200) und eine Reihe von Schaltern (220), die dazu geeignet sind, die Spurabschnitte (210) selektiv mit der Versorgungsleitung (250) zu verbinden, unter der Kontrolle der Erfassungsvorrichtungen (200), **dadurch gekennzeichnet, dass** die Reihe von Schaltern (220) und die Reihe von Detektoren (200) von einem Steuerdraht (420) durchquert werden, der mit einem Trennschalter (500, 600) verbunden ist, der dazu geeignet ist, die Versorgungsleitung (250) abzuschalten, wenn die Kontinuität des Steuerdrahts (420) nicht mehr sichergestellt ist, und dass ein Schalter (220) und ein Detektor (200), die mit demselben Spurabschnitt (210) verknüpft sind, Mittel aufweisen zum Unterbrechen der Kontinuität des Steuerdrahts (420), wenn der Schalter (220) den Abschnitt (210) versorgt und das Fahrzeug (100) auf diesem Abschnitt nicht erfasst wird.

10. Transportvorrichtung nach einem der vorhergehenden Ansprüche, umfassend eine Versorgungsleitung (250), eine Reihe von freiliegenden und voneinander isolierten Kontaktspurabschnitten (210), ein Reihe der Erfassungsvorrichtungen (200) und ein Reihe von Schaltern (220) die dazu geeignet sind, die Spurabschnitte (210) selektiv mit der Versorgungsleitung (250) zu verbinden, unter der Kontrolle der Erfassungsvorrichtungen (200), **dadurch gekennzeichnet, dass** die Reihe von Schaltern (220) und die Reihe von Detektoren (200) von einem Steuerdraht (420) durchquert werden, der mit einem Trennschalter (500, 600) verbunden ist, der dazu geeignet ist, die Versorgungsleitung (250) abzuschalten, wenn die Kontinuität des Steuerdrahts (420) nicht mehr sichergestellt ist, und dass ein Spurabschnitt (210) mit den Mitteln gekoppelt ist, die dazu geeignet sind, das Potential des Abschnitts mit einem Referenzpotential zu vergleichen und eine Unterbrechung der Kontinuität des Steuerdrahts zu steuern, wenn kein Fahrzeug auf dem Abschnitt (210) erfasst wird und das Potential des Abschnitts (210) größer ist als das Referenzpotential.

11. Vorrichtung nach Anspruch 10, **dadurch gekennzeichnet, dass** sie eine Stromrückleitung (240) umfasst, dass die Schalter (220) dazu geeignet sind, einen Spurabschnitt (210) entweder mit der Versorgungsleitung (250) oder mit der Rückleitung (240) zu verbinden, und dass die Mittel zum Vergleichen des Potentials des Abschnitts (210) mit einem Referenzpotential einen Strang (203) umfassen, der die Rückleitung (240) mit dem Abschnitt (210) parallel zu dem Schalter (220) verbindet, der mit dem Abschnitt (210) verknüpft ist, wobei dieser Strang (203) in Reihe eine Steuerung (205) eines Kontaktgebers des Steuerdrahts (420), der stromgesteuert ist, eine Diode (207), die von der Rückleitung (240) zu dem Abschnitt (210) durchlässig geschaltet ist, und eine Spannungsquelle (206), deren positiver Anschluss auf Seiten des Abschnitts (210) angeordnet ist, trägt.

12. Vorrichtung nach Anspruch 6, kombiniert mit Anspruch 11, **dadurch gekennzeichnet, dass** das Kohärenzüberprüfungsmittel (276) einen Unterbrecher steuert, der auf dem Strang (203) angeordnet ist.

13. Vorrichtung nach einem der Ansprüche 9 bis 12, **dadurch gekennzeichnet, dass** der Steuerdraht (420) zwei parallele Stränge (432, 434) umfasst, die sich zwischen zwei Flipflops (422, 424) erstrecken, die jeweils von dem Detektor (200) und dem Schalter (220) eines gleichen Spurabschnitts (210) gesteuert werden, so dass die Kontinuität des Steuerdrahts (420) nur für Positionen der beiden Flipflops (422, 424) sichergestellt wird, die den folgenden Situationen entsprechen:
- das Fahrzeug (100) wird gegenüber dem Abschnitt (210) nicht erfasst, und der Abschnitt (210) wird nicht versorgt;
- das Fahrzeug (100) wird gegenüber dem Abschnitt (210) erfasst, und der Abschnitt (210) wird versorgt.

14. Transportvorrichtung nach einem der vorhergehenden Ansprüche, **dadurch gekennzeichnet, dass** das Fahrzeug einen Generator (600) einer Digitalsequenz umfasst, die das codierte Signal bildet, wobei die Digitalsequenz im Laufe der Zeit zwei verschiedene Zustände einnimmt, ein Hochzustand und einen Tiefzustand, und dass das Fahrzeug einen Schalter (170) umfasst, der an jeweils zwei Eingängen das Trägersignal und die digitale Amplitudenverformungssequenz empfängt, wobei der Schalter (170) je nach dem Hoch- oder Tiefzustand der Digitalsequenz entweder das Trägersignal oder ein flach verlaufendes Signal ausgibt.

15. Transportvorrichtung nach einem der vorhergehenden Ansprüche, **dadurch gekennzeichnet, dass** sie Mittel umfasst zum Übertragen von Daten von dem Fahrzeug an die externe Erfassungsvorrichtung, wobei diese Daten keine Anwesenheitsanzeige sind und in dem codierten Signal enthalten sind.

16. Transportvorrichtung nach dem vorhergehenden Anspruch, **dadurch gekennzeichnet, dass** die Daten, die keine Anwesenheitsanzeige sind, Daten zur Identifizierung des Fahrzeugs umfassen.

17. Vorrichtung nach einem der vorhergehenden Ansprüche, **dadurch gekennzeichnet, dass** die Erfassungsvorrichtung Mittel umfasst zum Identifizieren und Speichern von Daten, die von einem Fahrzeug gesendet werden, in dem codierten Signal enthalten sind und keine Anwesenheitsanzeige sind.
